# EUROPEAN PATENT APPLICATION

(11) **EP 4 640 641 A1**
(43) Date of publication of application: **29.10.2025**
(21) Application number: 24305652.0
(22) Date of filing: 26.04.2024
(51) Int. Cl.: C02F 9/00, C02F 1/00, C02F 1/52, C02F 101/32, C02F 103/00, C02F 103/18

(54) **METHOD AND INSTALLATION FOR TREATING WATER CONTAINING POLLUTANTS**

(71) Applicant: Alfa Laval Moatti, 78990 Elancourt (FR)
(72) Inventor: NICOLLE, Adrien, 78990 ELANCOURT (FR)
(74) Representative: Alfa Laval Attorneys

(57) **Abstract**

A method for treating water containing pollutants comprising bringing, through a primary pipe (1), said water containing pollutants to separation means (2), separating a portion of the pollutants contained in said water by using said separation means (2), and obtaining a partially treated water, bringing said partially treated water to filtration means (4) through a secondary pipe (3), filtering said partially treated water by using said filtration means (4), and obtaining a treated water, backwashing said filtration means (4) with a portion of said treated water and obtaining a backwash water containing pollutants, evacuating said treated water from the installation through an evacuating pipe (5), recirculating, through a recirculation pipe (7), said backwash water containing pollutants to said separation means (2) or said primary pipe (1), said method being characterized in that it comprises distributing at least one coagulant product in said recirculating means.

## Description

### TECHNICAL FIELD

The disclosure relates to a method and an installation for treating fluids such as waters containing pollutants in view of obtaining a treated fluid containing at least less pollutants or no pollutant.

The disclosure may apply to the treatment of different types of fluids, such as industrial wastewaters, municipal wastewaters or formerly partially treated industrial or municipal wastewaters. Particularly but not exclusively, the disclosure may also be used for treating scrubbed waters outing from cleaning systems. More specifically, such cleaning system may be systems for cleaning exhaust gas or fumes onboard a ship, e.g. exhaust gas or fumes coming from a marine engine, a burner or a boiler.

### TECHNOLOGICAL BACKGROUND

Polluted water can contain a very wide variety of pollutants depending on their origin. These pollutants, which may have an organic or a mineral nature, can be present in water in dissolved form, in colloidal form, or in particle form. Among the organic pollutants, plastic materials or microplastic particles can be cited but also nitrogen and carbon pollution dissolved in wastewaters. Among the mineral pollutants, suspended mineral matter such as dusts or soot can be cited.

The legislative and regulatory provisions in force in many countries require not to discharge into the environment, and in particular into rivers and oceans, untreated or insufficiently treated polluted waters presenting concentrations of pollutants exceeding certain thresholds. For certain pollutants, these thresholds are very low.

Depending on the nature of the pollution they contain, polluted water must therefore be subject to different types of treatment. Such treatments and their complexity depend on the nature and concentration of the pollution. They generally include several steps. Such steps may be physicochemical steps and/or biological steps which use different types of biomass which degrade, through their metabolism, organic pollutants in harmless compounds.

Such treatment steps are implemented in different types of installations in which the polluted water flows continuously, or in which volumes of water can be treated in batches. These different stages of polluted water treatment can lead, for some of them, to the production of sludge in which all or part of the pollution is concentrated. This sludge must itself be subject to specific treatments such as a digestion.

Concerning the exhaust gases or fumes coming from engines, boilers or burners onboard ships, it is now prohibited, at least by certain national or regional provisions, to discharge these directly into the atmosphere. These gases or fumes may contain fine particles, particularly soot particles and/or oil droplets or microdroplets, which can be harmful to human health and/or to environment. Consequently, these gases and fumes must therefore be treated on board to extract at least most of these pollutants before being released into the atmosphere. To do this, on-board washing devices are used, in which a washing fluid such as water is projected in counter-current droplets onto these gases and fumes for capturing the pollutants they contain. This water is therefore loaded with these pollutants and must be treated on board before being released into the ocean.

A problem with many polluted water treatment methods lies in the fact that they use large quantities of reagents or consumables.

These reagents or consumable can be of different types. It can thus be mineral particles allowing pollution to be adsorbed, such as powder or grains of activated carbon. They may also be chemical products of a mineral or organic nature, such as in particular coagulant reagents or flocculating reagents.

Coagulating reagents are materials having a positive charge which allows them to associate with suspended or dissolved materials which have a negative charge. The positive charge of the coagulant reagents neutralizes the negative charge of the suspended or dissolved materials, coagulates are formed which have a density higher than that of water. The formation of such coagulates makes it possible to improve the efficiency of subsequent separation stages, for example by filtration or decantation.

Flocculating reagents can be used in previously coagulated water for increasing the size and density of the coagulates obtained during the prior coagulation step. The flocs thus obtained further improve the efficiency of subsequent separation steps.

In practice, these coagulating reagents are used over the whole amount of water to be treated. This flow may have been treated with of a primary treatment, such as decantation for eliminating gross particles it contains.

They can be applied to polluted waters to be treated in tanks or separate tank zones. In these tanks or tank zones, the polluted water must stay for a more or less long residence time depending on the polluting materials to be treated and their concentration in order to allow the reagents to fully fulfill their functions.

When the water to be treated is not heavy loaded of pollutants, the injection of coagulant reagents can be done directly online, that is to say in the pipeline bringing the polluted water to be treated to a stage of separating the coagulates from the rest of the water. However, also in this case, the injection of coagulant reagent is carried out over the entire amount to be treated.

The fact that the coagulating reagents are injected over the entire amount to be treated implies the consumption of significant quantities of reagents. Indeed, polluted waters can present concentrations of pollutants which vary over time. It is therefore necessary to use quantities of reagents which allow coagulation whatever these concentrations. This may involve using larger quantities of reagents than those would theoretically be necessary.

Although some installations implement online measurements and/or evaluations of the concentration of pollution in the water to be coagulated, the sensors and/or calculation means necessary for this implementation are expensive and significantly increase the costs of these installations and their operation.

With the aim of reducing the construction costs and especially the operating cost of installations and devices for treating polluted water, numerous studies are carried out to reduce the consumption of reagents which are necessary for them.

The main aim of the present disclosure is to propose a method for treating polluted water in which the consumption of at least one reagent is reduced as compared to methods of the prior art, and thus making it possible to reduce its operating cost.

Particularly, an aim of the present disclosure is to disclose a method for treating polluted water including a step using a coagulating reagent to coagulate said water, this method making it possible to reduce the quantities of this coagulating reagent without decreasing the reduction rate of the concentration of pollutants compared to the methods of the prior art.

Where applicable, when the method in question also includes an additional flocculation step of the previously coagulated water, another aim of the disclosure is also to reduce the consumption of flocculating reagent necessary for this step, without decreasing the rate of reduction of the concentration of pollutants compared to the methods of the prior art.

Yet another aim of the disclosure is to disclose such a method which also makes it possible to reduce the quantity of energy necessary for its implementation or at least for the implementation of certain steps thereof.

Yet another aim of the present disclosure is to describe an installation which can be obtained from existing installations by only slightly modifying them and at lower cost.

### SUMMARY OF THE DISCLOSURE

These aims, or at least some of them, are reached thanks to the disclosure which deals with a method for treating water containing pollutants, the method comprising:
bringing, through supply means including a primary pipe, said water containing pollutants to separation means,
separating a portion of the pollutants contained in said water by using said separation means, and obtaining a partially treated water,
bringing said partially treated water to filtration means through a secondary pipe,
filtering said partially treated water by using said filtration means, and obtaining a treated water,
backwashing said filtration means with a portion of said treated water and obtaining a backwash water containing pollutants,
evacuating said treated water from the installation through an evacuating pipe,
recirculating, through recirculating means including a recirculation pipe, said backwash water containing pollutants to said separation means or said supply means,
distributing at least one coagulant product in said recirculating means.

According to such a method, the coagulant product is not distributed in the flow of water to be treated but in the recirculating means, which recirculate backwash water charged with the pollutants retained by the filtration means. The concentration of pollutants within the backwash water being higher than the concentration of pollutants within the water entering the installation, the coagulant product acts with more efficiency. Consequently, less coagulant product is needed in comparison to installations of the prior art in which the coagulant product is injected in the water entering the installation, and the performance of the treatment method as a whole is enhanced.

In some embodiments, the said water containing pollutants treated by the method according to the disclosure is chosen from the group consisting of municipal wastewaters, partially treated municipal wastewaters, industrial waters, partially treated industrial waters, scrubbing waters which have been used for treating gas or fumes.

In a preferential embodiment, said water is a scrubbing water which has been used to wash exhaust gas of a ship engine.

In some embodiments, said pollutants include soot particles and/or oil droplets.

In some embodiments, the at least one coagulant product used in the method according to the disclosure is chosen in the group consisting of ferric chloride and aluminum sulfate.

In some embodiments, the method includes an additional step of analyzing the pollutants concentration of said backwash water to provide results, and distributing said at least one coagulant product in said backwash water containing pollutants according to said results. Thanks to such an additional step, the quantity of injected coagulant is made according to the concentrations of the pollutants in the backwash water.

The disclosure also deals with an installation for the treatment of a water containing pollutants, said installation comprising:
- supply means including a primary pipe for supplying said water containing pollutants to separation means for obtaining a flow of partially treated water,
- a secondary pipe for supplying said flow of partially treated water to filtration means for obtaining a flow of treated water,
- an evacuating pipe for evacuating said treated water from the installation,
- backwashing means for backwashing said filtration means with a counter-flow of treated water, and producing a backwash water loaded with pollutants,
- recirculating means including a recirculation pipe for recirculating said backwash water in said supply means or said separation means, and
- a coagulant distributor for distributing at least one coagulant product in said recirculating means.

In some embodiments, said separation means are chosen from the group consisting of one or more decanter, one or more high-speed separators (HSS), one or more centrifuges, and a combination thereof.

In a preferential embodiment, said filtration means are non-membrane filtration means. Alternatively, said filtration means may include membrane filtration means.

In a preferential embodiment, said filtration means comprise an automatic filter in which filtration and backwashing are carried out simultaneously and continuously.

In some embodiments said installation comprises at least one sensor for analyzing the pollutant concentration of said backwash water and means connected to said at least one sensor for actuating said coagulant distributor.

In some embodiments, the supply means include a supply tank, said recirculation pipe being connected to said supply tank.

In some embodiments, the recirculating means include an intermediary tank, said coagulant distributor being connected to said intermediary tank.

### BRIEF DESCRIPTION OF THE DRAWINGS

The invention and advantages thereof will be better understood upon reading the detailed description which follows of three embodiments of the invention given as a non-limiting examples. This description refers to the appended drawings wherein:
- Fig. 1 illustrates a schematic representation of an installation for the treatment of a scrubbing water;
- Fig. 2 illustrates a schematic representation of an installation in which the supply means include a supply tank;
- Fig. 3 illustrates a schematic representation of an installation in which the recirculating means includes an intermediary tank and the supply means include a supply tank.

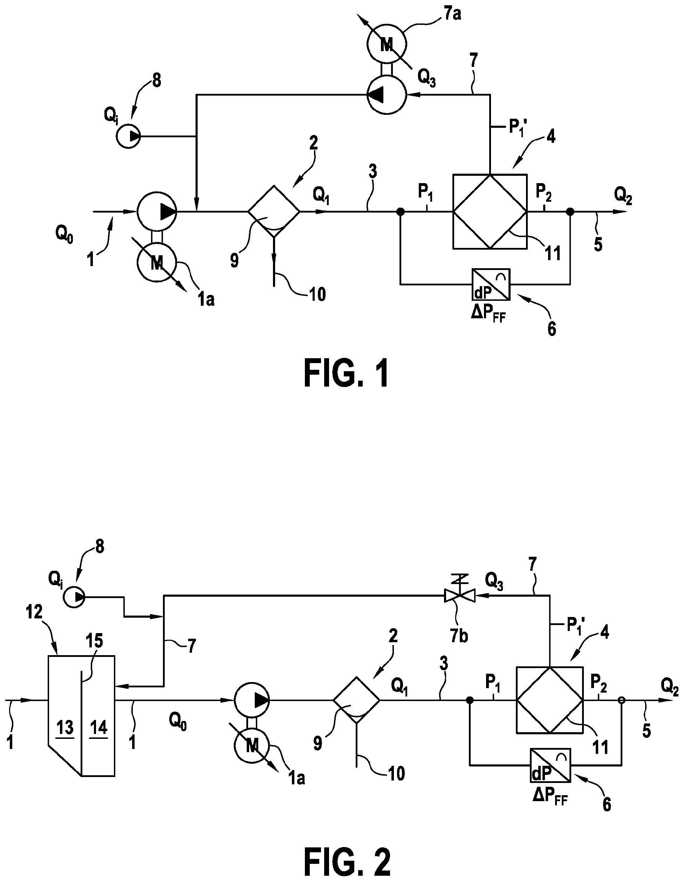

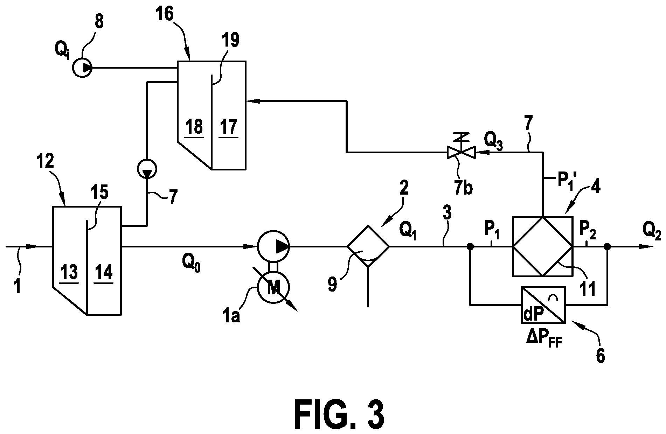

In these drawings, elements belonging to the embodiments described in reference to Fig.2 and Fig.3 and having a similar function as corresponding elements in the embodiment described in reference to Fig.1 are identified by the same reference signs.

### DETAILED DESCRIPTION OF AN EMBODIMENT

Figure 1 diagrammatically illustrates an installation for the treatment of water containing pollutants according to an embodiment. Without loss of generality, the water containing pollutants may be scrubbing water that may have been used to wash the exhaust gas of a ship engine. The installation of Fig.1 includes supply means including a primary pipe 1 and a pump 1a for supplying said scrubbing water (e.g. at a flow rate Q₀) to separation means 2. While a specific type of pump 1a has been represented, any suitable type of pump 1a is contemplated. The water obtained at the exit of said separation means 2 is supplied (e.g. at a flow rate Q₁) through a secondary pipe 3 to filtration means 4. The filtered water, also referred to as the treated water, is evacuated from the installation through an evacuating pipe 5, e.g. at a flow rate Q₂. Backwashing means are provided for backwashing the filtration means and producing a backwash water loaded with pollutants. That is, the concentration of at least some of the pollutants in the backwash water is higher than in the water containing pollutants (i.e. the water to be treated), and a fortiori than in the treated water. In the present embodiment, the backwashing means are integrated with the filtration means 4, hence not visible in Fig. 1. However, in variants, the backwashing means could be provided outside the filtration means 4.

A sensor 6, e.g. a pressure drop indicator, may be provided for monitoring and/or control purposes. In this embodiment, the sensor 6 measures the pressure drop ΔP_{FF}=P1-P2 across the filtration means 4.

Recirculating means, including a recirculation pipe 7 and a pump 7a, are provided for recirculating the backwash water containing pollutants to said primary pipe 1, e.g. at a flow rate Q₃. A coagulant distributor 8 is provided for distributing at least one coagulant product in the recirculation means, e.g. in the recirculation pipe 7 or anywhere in the backwash water containing pollutants, e.g. at a flow rate Qᵢ.

Thanks to the invention, the coagulant product is distributed in the backwash water only and not in the water to be treated entering the installation. In this way, the quantities of coagulant may be lowered as compared to the prior art. In addition, the coagulant product is distributed to water in which the concentration of pollutants is relatively high, whereby the efficiency of the coagulation is enhanced.

In this embodiment given as an example, the separation means 2 include a decanter 9 which separates by density difference a portion of the pollutants contained in the water to be treated. The recirculation pipe 7 being connected to the primary pipe 1 upstream of the decanter 9, the water to be treated arriving at this decanter 9 has received a quantity of coagulant. The decantation is thus easier. Pump 7a provides the necessary pressure for recirculating fluid back to the primary pipe 1, downstream of the pump 1a.

During the decantation of the water in the decanter 9, a part of the pollutants decants and forms sludge at the bottom of the decanter 9. This sludge is periodically evacuated from the decanter 9 through a pipe 10. It can subsequently undergo a treatment such as for example a digestion.

The water which has been clarified in the decanter 9 is brought via the pipe 3 to the filtration means 4. In this embodiment given by way of example, these filtration means 4 include an automatic filter 11. Such an automatic filter 11 may be designed to be cleaned continuously, with or without auxiliary energy, by means of backwashing means. With such backwashing means, a part of the treated water leaving the filter 11 is continuously sent counter-currently through it. This part may represent e.g. from 5% to 15% by volume of the treated water, possibly more. The backwash water which is loaded with pollutants is continuously recirculated towards pipe 1 via the recirculation pipe 7 and receives some coagulant thanks to the distributor 8.

The installation of Fig. 2 differs from that of Fig.1 by the recirculating means used for recirculating the backwash water containing pollutants outing from the filter 4 and the supply means used for supplying the water to be treated to the decanter 9.

The recirculating means includes a recirculation pipe 7 and a valve 7b (instead of pump 7a in installation of Fig.1).

The supply means includes a primary pipe 1, a pump 1a and a supply tank 12 upstream of said pump 1. The supply tank 12 may be provided with two compartments 13, 14 separated by a wall 15. Among these compartments, a first compartment 13 receives water to be treated from a first portion of the primary pipe 1 and a second compartment 14 receives the mixture of coagulant and backwash water containing pollutants from the recirculation pipe 7. When the first compartment 13 is full, the water overflows wall 15 and meets the mixture of backwash water containing pollutants and coagulant in the second compartment 14. This resulting fluid is then conveyed to the filter 9 by a second portion of the primary pipe 1.

Thanks to such a supply tank 12, the contact time between the water containing pollutants and the coagulant product, and consequently the efficiency of the coagulant product, are increased.

As the supply tank 12 is preferably open to outside air, the recirculating means may not need a pump 7a as in the first embodiment. In this embodiment, a valve 7b may be provided instead, in order to selectively allow flow of the backwash water containing pollutants. Valve 7b is optional and no regulating means may be provided. Alternatively, a pump may nevertheless be provided in the recirculating means in addition to valve 7b. Valve 7b may be regulated as desired, e.g. manually or based on the pressure difference across the filtering means (e.g. the pressure drop across the filter P1-P2 or the pressure drop across the filtration area being backflushed P2-P1').

The installation of Fig. 3 differs from that of Fig. 2 by the recirculating means used for recirculating the backwash water containing pollutants outing from the filter 4. This recirculating means include a recirculation pipe 7 and an intermediary tank 16.

The intermediary tank 16 is provided with two compartments 17, 18 separated by a wall 19. Among these compartments, a first compartment 17 receives the backwash water containing pollutants from a first portion of the recirculation pipe 7 and a second compartment 18 is connected to the coagulant distributor 8. When the first compartment 17 is full, the fluid overflows wall 19 and is mixed with the coagulant product in the second compartment. The resulting fluid is then conveyed to the supply tank 12 by a second portion of the recirculation pipe 7.

As illustrated, the recirculating means may comprise a relief pump arranged between the intermediary tank 16 and the supply tank 12.

Thanks to the intermediary tank 16, the contact time between the water containing pollutants and the coagulant product, and consequently the efficiency of the coagulant product, are further increased.

In the embodiments of Figs. 2 and 3, the walls 15, 19 may be omitted; the supply tank 12 and the intermediary tank 16 would still promote mixing and thus effectiveness of the coagulant product.

The invention thus makes it possible to reduce the quantities of coagulants necessary for the implementation of the installation, compared to the quantities necessary for the implementation of the installations of the prior art in which the coagulant is added to the water entering the installation. Indeed, according to the invention, the coagulant being distributed in water being more loaded with pollutants than the water to be treated arriving in the installation via pipe 1, this coagulant can act more effectively than if it were distributed in the water to be treated supplied via the primary pipe 1.

Although the present invention has been described by referring to a specific exemplary embodiment, modifications may be provided to this example without the departing from the general scope of the invention as defined by the claims. In particular, individual characteristics of illustrated/mentioned embodiment may be combined in additional embodiments. Therefore, the description and the drawing should be considered in an illustrative rather than in a restrictive sense.

## Claims

1. A method for treating water containing pollutants, the method comprising:
bringing, through supply means including a primary pipe (1), said water containing pollutants to separation means (2),
separating a portion of the pollutants contained in said water by using said separation means (2), and obtaining a partially treated water,
bringing said partially treated water to filtration means (4) through a secondary pipe (3),
filtering said partially treated water by using said filtration means (4), and obtaining a treated water,
backwashing said filtration means (4) with a portion of said treated water and obtaining a backwash water containing pollutants,
evacuating said treated water from the installation through an evacuating pipe (5),
recirculating, through recirculating means, said backwash water containing pollutants to said separation means (2) or said supply means,
distributing at least one coagulant product in said recirculating means.

2. The method according to claim 1, wherein said water containing pollutants is chosen from the group consisting of municipal wastewaters, partially treated municipal wastewaters, industrial waters, partially treated industrial waters, scrubbing waters which have been used for treating gas or fumes.

3. The method according to claim 2, wherein said water containing pollutants is a scrubbing water which has been used to wash exhaust gas of a ship engine.

4. The method according to any one of claims 1 to 3, wherein said pollutants include soot particles and/or oil droplets.

5. The method according to any one of claims 1 to 4, wherein said at least one coagulant product is chosen from ferric chloride and aluminum sulfate.

6. The method according to any one of claims 1 to 5, comprising analyzing the pollutants concentration of said backwash water to provide analysis results and distributing said at least one coagulant product in said backwash water containing pollutants according to said analysis results.

7. An installation for the treatment of a water containing pollutants, said installation comprising:
supply means including a primary pipe (1) for supplying said water containing pollutants to separation means (2) for obtaining a flow of partially treated water,
a secondary pipe (3) for supplying said flow of partially treated water to filtration means (4) for obtaining a flow of treated water,
an evacuating pipe (5) for evacuating said treated water from the installation,
backwashing means for backwashing said filtration means with a counter-flow of treated water, and obtaining a backwash water containing pollutants,
recirculating means including a recirculation pipe (7) for recirculating said backwash water in said supply means or said separation means (2), and
a coagulant distributor (8) for distributing at least one coagulant product in said recirculating means.

8. The installation according to claim 7, wherein said separation means are chosen from the group consisting of one or more decanters, one or more high-speed separators, one or more centrifuges, and a combination thereof.

9. The installation according to any one of claims 7 or 8, wherein said filtration means are non-membrane filtration means.

10. The installation according to any one of claims 7 to 9, wherein said filtration means (2) comprise an automatic filter in which filtration and backwashing are carried out simultaneously and continuously.

11. The installation according to any one of claims 7 to 10, comprising at least one sensor for analyzing the pollutant concentration of said backwash water and means connected to said at least one sensor for actuating said coagulant distributor.

12. The installation according to any one of claims 7 to 11, wherein said supply means include a supply tank (12), said recirculation pipe (7) being connected to said supply tank.

13. The installation according to any one of claims 7 to 12, wherein said recirculating means include an intermediary tank (16), said coagulant distributor (8) being connected to said intermediary tank.
